Europäisches Patentamt

European Patent Office

Office européen des brevets

(19)

(11) **EP 0 354 561 B1**

(12) **EUROPEAN PATENT SPECIFICATION**

(45) Date of publication and mention
of the grant of the patent:
**23.07.1997  Bulletin 1997/30**

(51) Int Cl.[6]: **G05D 1/02**

(21) Application number: **89114747.2**

(22) Date of filing: **09.08.1989**

(54) **Automatic travelling apparatus and method**

Verfahren und Gerät zum automatischen Fahren

Procédé et appareil pour se déplacer automatiquement

(84) Designated Contracting States:
**AT CH DE FR GB IT LI SE**

(30) Priority: **10.08.1988  JP 199610/88**

(43) Date of publication of application:
**14.02.1990  Bulletin 1990/07**

(73) Proprietor: **HONDA GIKEN KOGYO KABUSHIKI
KAISHA
Minato-ku Tokyo (JP)**

(72) Inventors:
  • **Asanuma, Yoshinobu
    Wako-shi Saitama-ken (JP)**
  • **Ishida, Shinnosuke
    Wako-shi Saitama-ken (JP)**
  • **Hasegawa, Hiroshi
    Wako-shi Saitama-ken (JP)**

(74) Representative:
**Prechtel, Jörg, Dipl.-Phys. Dr. et al
Patentanwälte
H. Weickmann, Dr. K. Fincke
F.A. Weickmann, B. Huber
Dr. H. Liska, Dr. J. Prechtel, Dr. B. Böhm
Postfach 86 08 20
81635 München (DE)**

(56) References cited:
  DE-A- 3 820 589          US-A- 4 665 487
  US-A- 4 706 771

  • **IEEE JOURNAL OF ROBOTICS AND
    AUTOMATION. vol. RA-3, no. 2, April 1987, NEW
    YORK US pages 124 - 141; A. WAXMAN ET AL.:
    "A Visual Navigation System for Autonomous
    Land Vehicles"**
  • **1986 Proceedings : FALL JOINT COMPUTER
    CONFERENCE November 2-6 1986 ; Sponsored
    by ACM and Computer Society of the IEEE Dallas
    Texas pages 105 - 112; Y. GOTO ET AL.: "CMU
    Sidewalk Navigation System: A
    Blackboard-Based Outdoor NavigationSystem
    Using Sensor Fusion with Colored-Range
    Images"**
  • **IEEE EXPERT. vol. 2, no. 4, 1987, NEW YORK US
    pages 44 - 54; Y. Goto et al.: "Mobile Robot
    Navigation: The CMU System"**

## Description

The present invention relates to an automatic travelling apparatus according to the preamble part of claim 1.

From an article titled "A Visual Navigation System for Autonomous Land Vehicles" by A.M. Waxman et al., published in IEEE Journal of Robotics and Automation, VOL. RA-3, NO. 2, April 1987, pages 124-140, a robot arm vehicle simulator is known simulating an automatic travelling apparatus having the features of the preamble part of claim 1.

According to this publication the automatic travelling apparatus decomposes the path which the vehicle has to follow into a set of short, straight line segments. More particularly, the simulator computes a tentative course beginning at the simulated current position, sloping in the direction of the heading of the simulated vehicule and terminating 13 meter along the target course, in this case the road center line of a road network model. The computed tentative course is converted in a sequence of steering commands relating to the robot arm which carries a CCD camera (as vehicle) over said road network model, whereby a curved path is decomposed in a set of short straight line segments.

From US-A-4,655,487 a vehicle is known which is so controlled as to travel along a fixed target course defined by a conductor embedded in the floor in response to command signals transmitted from a fixed host computer. For following this fixed course, a control mechanism (closed-loop control) is provided which is dependent on the speed of the vehicle.

From US-A-4,706,771 a vehicle steering control system for steering either off (or both) front and rear wheel pairs of a controlled vehicle is known. To determine a desired value of a front or rear wheel steering angle, desired values of yaw rate and lateral acceleration corresponding to the steering wheel angle (sensed by a steering wheel angle sensor) and the vehicle speed (sensed by a vehicle speed sensor) are calculated by using at least one desired mathematical vehicle model.

From Japanese Patent Publication No. 58-42482 (compare also Japanese Patent Application Public Disclosure No. 62-140109) a further automatic travelling system is known which uses an image pick-up device attached to a vehicle to steer the vehicle, thereby permitting it to follow a guideline which is laid on the road. Apparantly, such an automatic travelling system is useless on a road having no guideline.

From Japanese Patent Application Public Disclosure No. 62-70916 an automatic travelling system in the form of an automatic power lawn mower is known being equipped with an image pick-up device such as a video camera. While continuously taking images of the lawn area ahead the lawn mower, these images are treated to enhance the difference of shade between the finished and unfished areas, thereby permitting exact detection of the boundary between the finished and unfinished areas. The mower is steered to travel along the boundary thus detected. Accordingly, this automatic travelling system is capable of determining a course to follow, but this automatic travelling system is essentially the same as the automatic travelling system described above in respect of the vehicle which follows a single guideline laid on a road.

It is an object of the invention to provide an automatic travelling apparatus according to the preamble part of new claim 1, which is capable of following the target course smoothly with high reliability. This object is achieved by the automatic travelling apparatus having the features of claim 1.

Estimation of the steering amount on the basis of the instantaneous running conditions and comparison of the presumed course determined by the instantaneous running conditions with the target course guarantee that the vehicle follows the target course smoothly for a wide range of instantaneous running conditions and target course curvatures. If the vehicle is not on the target course, it is caused to get on the target course and remain there afterwards. The comparison of the presumed course with the target course corresponds in effect to a sort of closed-loop control which provides a very high reliability in smoothly following the target course as exactly as possible.

Contrary to ordinary closed-loop control there is no mere comparison of an instantaneous position with the target course, but a comparison of the estimated presumed course the vehicle would follow if no steering action were effected with the target course. The presumed course the vehicle would follow if no steering action were effected and, in particular, the curvature of this presumed course (and as a consequence the necessary steering amount) strongly depend on the instantaneous running conditions. For example, to reach the target course or remain on the target course, the necessary steering amount will be different for high velocity than or low velocity of the vehicle. Without such comparison of the presumed course with the target course and estimation of the steering amount on the basis of the instantaneous running conditions it is easily possible that the course of the vehicle deviates from the target course making corrections necessary which results in an unsmooth course of the vehicle.

Other objects and advantages of the present invention will be understood from the following description of an automatic travelling apparatus according to a preferred embodiment of the present invention which is shown in accompanying drawings:

Fig. 1 is a block diagram of an automatic travelling apparatus according to one embodiment of the present invention;
Fig. 2 is a block diagram of permissible area determining means;
Fig. 3 shows one example of road determined from images taken by a video camera of a vehicle;

Fig. 4 shows an image resulting from the projection transformation of the image of Fig.3;

Fig. 5 shows one example of a target course set in the road;

Fig. 6(a) shows one example of a target course set in the road for a vehicle running at a decreased speed;

Fig. 6(b) shows one example of a target course set in the road for a vehicle running at an increased speed;

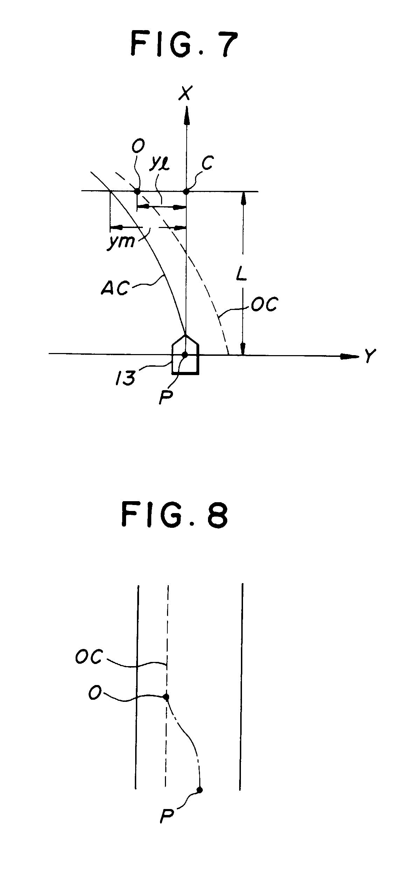

Fig.7 shows the relation between a target course and a presumed course;

Fig. 8 shows one example of course which the vehicle follows when a vehicle puts itself on a target course;

Fig.9 shows the manner in which a vehicle is travelling toward a Y-branch;

Figs. 10(a) to 10(b) show different travelling controls in different sections corresponding to those of Fig. 9;

Fig. 11 is a block diagram showing a travelling system;

Fig. 12 shows one example of image appearing on the screen of a display unit;

Fig. 13 shows what marks appear on the screen of the display unit when travelling commands are inputted;

Fig. 14 shows a line L appearing in the X-Y coordinates; and

Fig. 15 shows a point appearing on the $\rho$-$\theta$ coordinates when the line L in Fig. 14 is subjected to the Hough conversion.

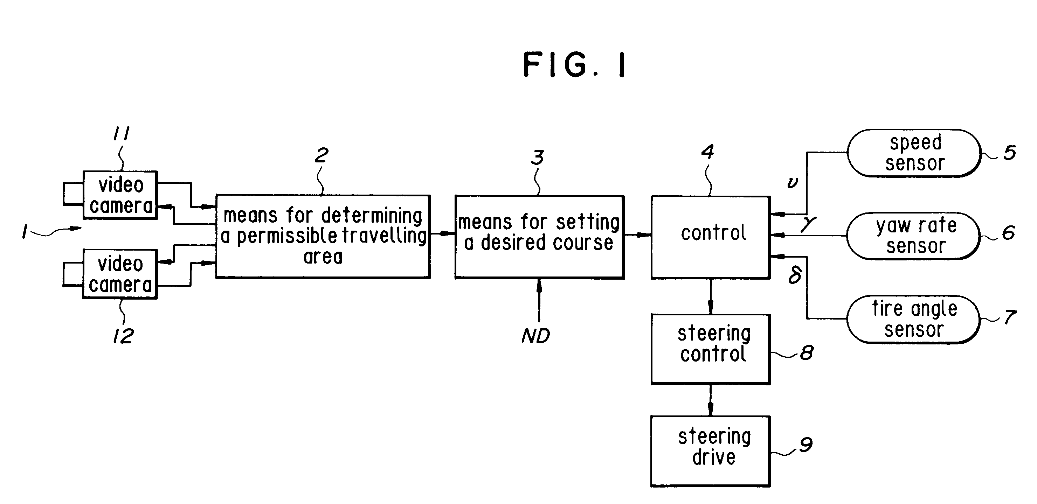

As shown in Fig. 1, an automatic travelling apparatus according to the present invention comprises: an image pickup device such as video cameras 11 and 12 attached to a vehicle for continuously picking up subsequent images of ground ahead of the vehicle; means 2 for processing the images taken by the video cameras and determining a permissible travelling area such as a road in the direction in which the vehicle is to travel; means 3 for setting a target course in the permissible travelling area thus determined; means 4 for determining the instantaneous running condition of the vehicle on the basis of an output signal from a speed sensor 5 representing the running speed "v" of the vehicle, an output signal from a yaw rate sensor 6 representing the yaw rate or angular velocity increment in yawing direction, and an output signal from a tire angle sensor 7 representing the tire angle $\delta$ which varies with the steering of the vehicle, and for estimating, on the basis of the instantaneous running condition, a steering amount to permit the vehicle to follow the target course; and means 8 (and a steerage drive 9) for steering the vehicle with reference to the steering amount.

Actually, a computer aided control is used in place of means 2, 3 and 4, and means 8 can be included in the computer aided control, if occasions demand.

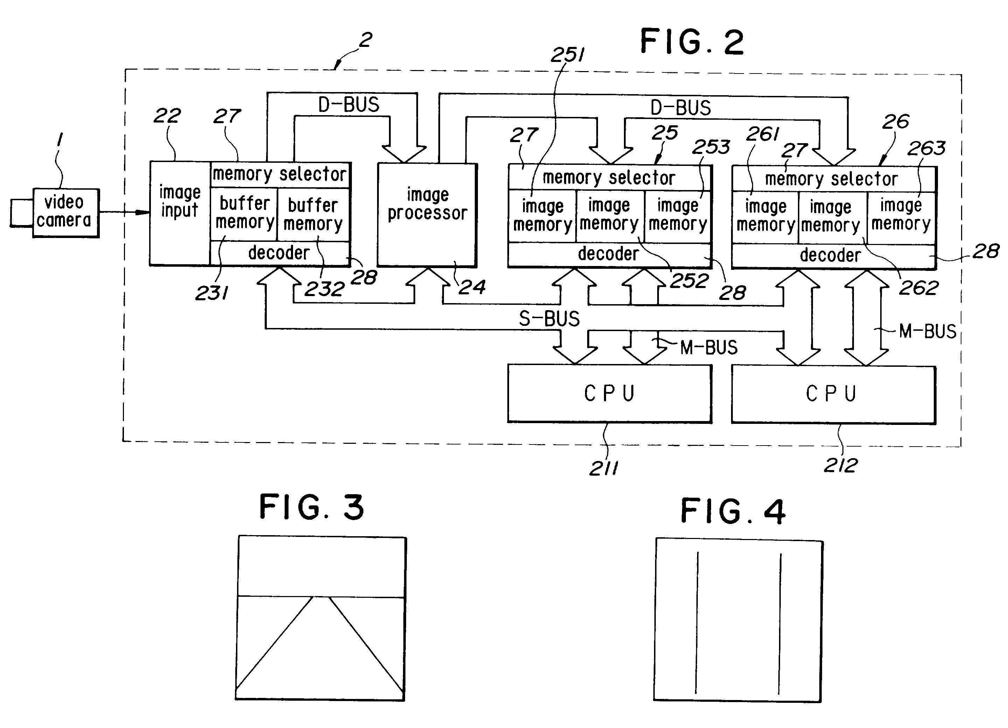

Fig.2 shows the structure of the permissible travelling area determining means 2 as comprising: first stage including image input 22, buffer memories 231, 232, memory selector 27 and decoder 28; second stage including image processor 24 connected to memory selector 27 of the first stage via D-bus (high-speed data bus); third stage including memory selector 27, image memories 251, 252 and 253 and decoder 28; fourth stage including memory selector 27, image memories 261, 262 and 263 and decoder 28, memory selectors 25 and 26 of the third and fourth stages being connected to the image processor 24 via D-bus; first and second CPUs 211 and 212 both connected to decoders 28 of the first, third and fourth stages via S-bus (system bus) and connected to decoders 28 of the third and fourth stages via M-bus (high-speed memory access bus).

In operation a series of image signals each representing a single image are supplied from the video cameras 11, 12 to the image input of the first stage, and then these image signals are stored alternately in the buffer memories 231 and 232 under the control of the CPUs 211 and 212. Then, these image informations are shifted to the image processor 24 one after another, where they are subjected to image processing, thereby detecting road edges in images if any, and determining a permissible travelling area as later described in detail. The image informations pertaining to permissible travelling areas are supplied to a group of image memories 251, 252 and 253 or a group of image memories 261, 262 and 263. Then, the contents of these memories are renewed by these latest image informations pertaining to permissible travelling areas. Thus, a series of image informations pertaining to subsequent permissible travelling areas, over a predetermined distance which the vehicle runs, are stored in either memory group. The contents of either memory group 25 or 26 are transferred to means 3 for setting a target course in the permissible travelling area.

Parallel installations of two CPUs 211 and 212 and two buffer memories 231 and 232 permit alternate retrieval or storage of image informations to either buffer memory, as for example follows: while first image informations stored in the buffer memory 231 are read under the control of the CPU 211, subsequent image informations are stored in the buffer memory 232 under the control of the CPU 212. Thus, the inputting of image informations can be carried out on the real time basis.

Likewise, parallel installation of two groups of image memories 25 and 26 permit alternate retrieval or storage of image information to either memory group on the real time basis.

The determination of a permissible travelling area can be made as follows:

First, each image supplied from the video cameras will be subjected to differentiation process, and road edges if any, will be detected. Then, an automatic threshold setting circuit in the permissible travelling area detection means 2 sets a threshold value in consideration of road the degree of shade of the image information just processed. The road edge image will be subjected to binary transformation.

Alternately, first, the images may be subjected to binary transformation, and then the binary data may be subjected to differentiation. In place of binary transformation poly-digitization may be performed to express some shade details of image.

Digitalized image information will be subjected to the Hough conversion to convert the X-Y linear coordinates to the corresponding $\rho$-$\theta$ point coordinates, thus eliminating isolated points and plotting to provide a continuous road edge image as shown in Fig. 3.

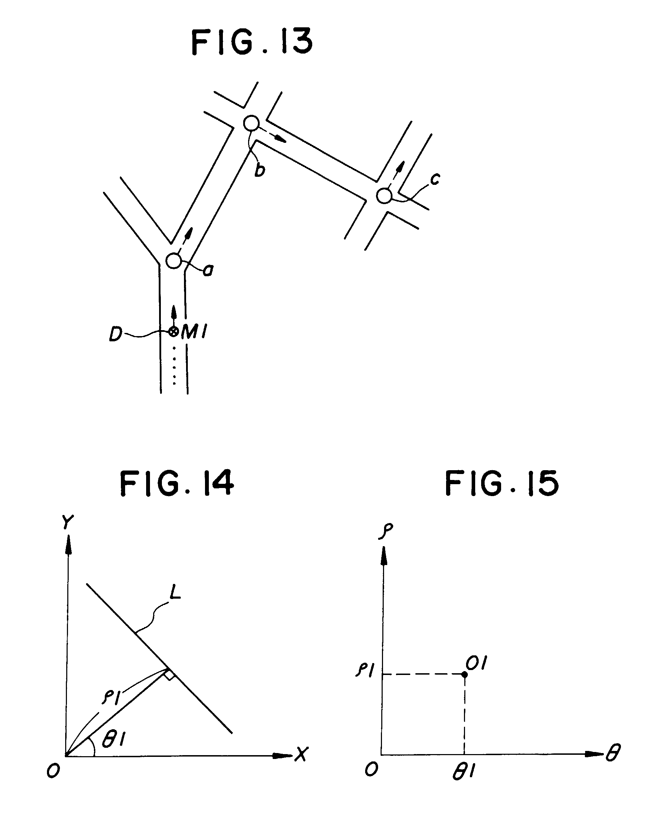

$\theta$ stands for an angle formed between the X-axis and a normal line extending from the origin of the X-Y coordinates perpendicular to the line, whereas $\rho$ stands for the length of the normal line. For instance, the line L in the X-Y coordinates in Fig. 14 is expressed as the point 01 in the $\rho$-$\theta$ point coordinates in Fig. 15.

On that occasion edge tracing may be performed on the basis of binary-coded image information to obtain a continuous road edge. Hough conversion, edge tracing and other appropriate processings may be performed simultaneously, and then synthetic judgement may be made on the results of these processings to obtain a precise road edge information.

The image taken by a video camera represents a perspective view. The perspective road edge image as shown in Fig. 3 can be converted to non-perspective road edge image as shown in Fig. 4 according to the projection conversion process. The area between contiguous road edges is a permissible travelling area.

The permissible travelling area determining means 2 has a projection conversion characteristics set in consideration of the perspective projection characteristics of associated video cameras.

A wide angle video camera 12 and a telescope video camera 11 may be used in addition to an ordinary video camera, and these extra video cameras may be selectively used under the control of the permissible travelling area determining means 2. For example, the road edge which is determined from the images taken by the telescope video camera 11 shows the lost of linearity, and then the wide angle video camera 12 is selected to supply images of curved road. Contrary to this, the road edge which is determined from the images taken by the wide angle video camera 12 shows the presence of linearity, and then the telescope video camera 11 is selected to supply images of straight road.

After a permissible travelling area is determined by the permissible travelling area determining means 2, the target course setting means 3 will select a course most appropriate for running in the permissible travelling area, and will set the so selected course as a target course to follow.

Preferably, the course may be determined in consideration of the road contour and the running speed of the vehicle to meet the instantaneous travelling condition of the vehicle. However, the course may be basically determined in consideration of the width of the road as follows:

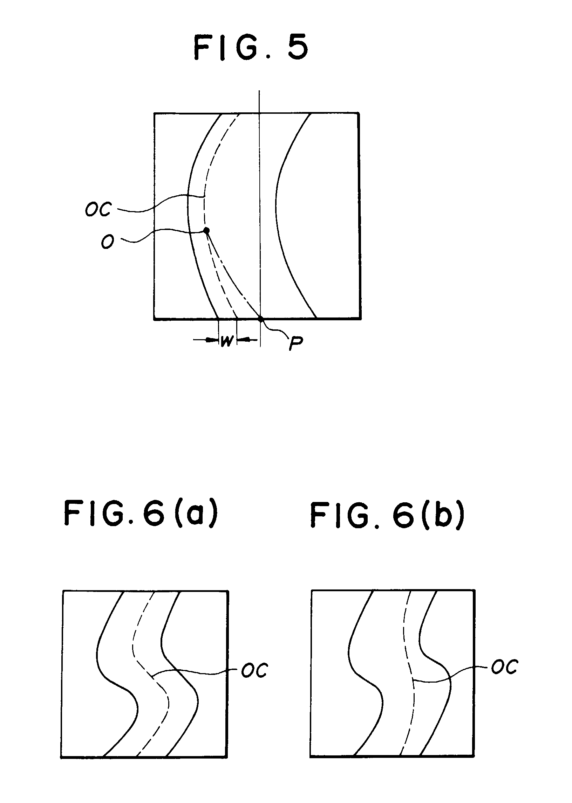

In case that the target course setting means 3 finds that the width of the road is above a predetermined extent, and that vehicles must keep to the left, a target course OC will be set a given constant distance "W" (for instance, 1.5 meters) apart from the left edge of the road, as shown in Fig. 5.

In case that the width of the road is below the predetermined extent, a target course will be set along the center line of the road.

As the vehicle is running, the contents of the memories of the target course setting means 3 are renewed, and the coordinates of the target course are continuously stored therein. The divisions of the X-Y coordinates are selected in compliance with the magnification of the video camera.

In Fig. 5 the current or instantaneous vehicle position is indicated at "P", and the video camera may be placed so as to permit the point "P" to appear at the center, lower point of the display screen. The trace of the vehicle from "P" to "0" represents the course actually followed by the vehicle under the control of the control 4 until the vehicle has come to the target course at point 0.

Also, it is possible to set a target course in consideration of the running condition of the vehicle as follows:

In case that the target course setting means 3 finds that the running speed measured by the speed sensor 5 is below a predetermined speed, the target course will be set in conformity with the road contour as seen from Fig. 6a.

When the running speed of the vehicle is higher than a predetermined speed, and when the vehicle is running a curved road as shown in Fig. 6b, a target course of reduced curvature OC is set so as to reduce the lateral force which is applied to the vehicle.

After setting a target course in the road, the control 4 will estimate a steering amount to permit the vehicle to follow the target course as follows:

Assume that a vehicle 13 at Point "P" is controlled to get on the target course OC.

First, the distance L(m) ($L = v \times T$) on the X-axis which the vehicle can run in T seconds will be determined on the basis of the running speed of the vehicle v (m/s), which is determined by the speed sensor. Then, the lateral deviation yl from Point "C" (on which the vehicle would be in T seconds if it travelled straight along the X-axis) to the target course OC will be estimated.

Second, the course AC which the vehicle is supposed to follow, will be estimated from the yaw rate $\gamma$ (rad/sec), and then, the lateral deviation ym from Point "C" to the presumed course will be estimated by the following equation:

$$ym = (-v \times T^2/2) \times \gamma \qquad (1)$$

The positive sign of yaw rate $\gamma$ represents that the presumed course turns to the left whereas the negative sign of yaw rate $\gamma$ represents that the presumed course turns to the right.

The yaw rate $\gamma'$ to which the yaw rate of the vehicle is to be corrected will be determined from the following equation:

$$\delta' = \delta + (\gamma'/v) \times W (1 + Kv^2) \qquad (2)$$

, where "W" stands for wheelbase, "K" is a constant which is determined both from the tire characteristics and the vehicle characteristics.

The steering control 8 is responsive to the steering amount $\delta'$ from the control 4 for issuing a drive command to the steerage drive 9, thereby causing the steerage drive 9 to steer the vehicle towards the target course.

The setting of the distance L on the X-axis may vary with the running speed of the vehicle under the control of the control 4. In particular, the distance L on the X-axis may decrease with the decrease of the running speed v of the vehicle, accordingly reducing the distance which the vehicle runs before getting on the target course OC, causing the vehicle to get on the target course OC as quickly as possible.

In case that the vehicle is running in a curved path, the distance L may decrease with the decrease of the curvature of the curved path, thereby causing the vehicle to get on the target course as quickly as possible.

A predetermined course pattern for a vehicle to follow from Point "P" to Point "O" on the target course may be advantageously used. This course pattern may be modified by a course factor which may be determined from the distance "L" and the running speed v to meet the particular situation. The vehicle can get on the target course smoothly by following the modified course pattern from Point "P" to Point "O" on the target course.

One example of the course pattern is given by $y = x - \sin x$, and another example is given by $y = x^3$.

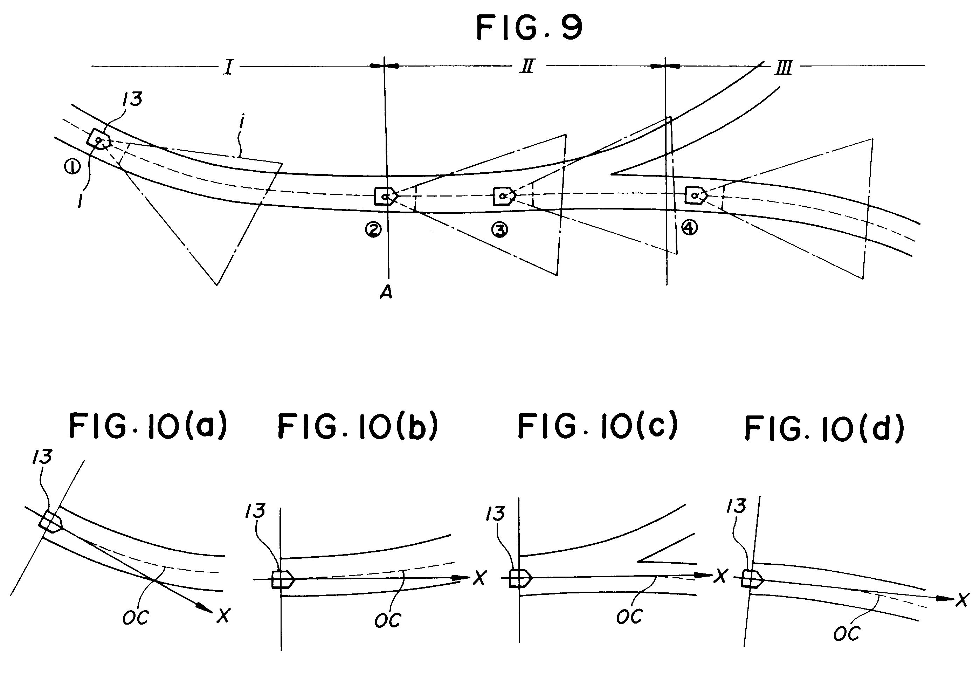

Fig. 8 shows a course pattern represented by $y = x - \sin x$.

The processes described above are repeated at every interval of several seconds to permit the vehicle to run along the target course automatically.

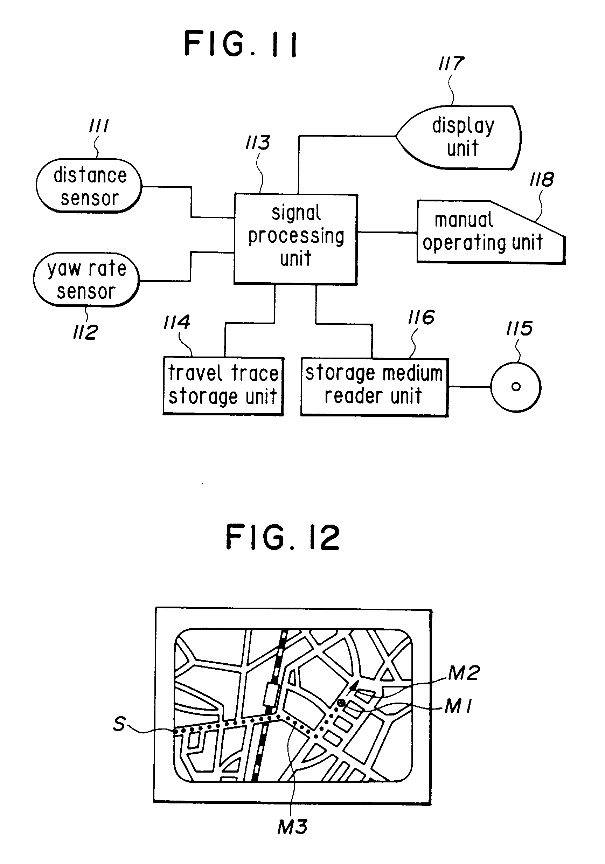

The target course setting means 3 sets a target course OC in response to signals ND from a travelling system (See Fig. 11) informing a car for example, which way of a Y-branch the vehicle must take as follows:

Referring to Fig. 9, the vehicle is approaching to a Y-branch.

While the vehicle is running in an ordinary travelling area of relatively narrow width I in Fig. 9, a target course OC is set on the center line of the travelling area, as shown in Fig. 10(a).

In Fig. 9 each triangular area i (broken lines) indicates the area whose image can be taken by a video camera 1 of the vehicle 13.

When the vehicle is approaching to a Y-branch as indicated by II in Fig. 9, the travelling system having necessary travelling informations inputted therein, will send a command ND such as "Take the right way of the Y-branch appearing ahead of the car." to the target course setting means 3 at the time when the vehicle has come to Position A a predetermined distance apart from the Y-branch. According to the command from the travelling system the target course setting means 3 sets a target course OC gradually approaching from Position A to the right way as shown in Fig. 10(b). When the video camera catches the sight of the Y-branch ahead, the target course setting means 3 sets a target course OC extending in the right way of the Y-branch.

After the vehicle runs in the right way of the Y-branch, and after the vehicle enters an ordinary travelling area of relatively narrow width indicated at III in Fig. 9, the target course setting means 3 returns to the ordinary operation, setting a target course OC on the center line of the way.

The part (1) in Fig. 9 corresponds to Fig. 10(a); the part (2) in Fig. 9 corresponds to Fig. 10(b); the part (3) in Fig. 9 corresponds to Fig. 10(c) and the part(4) in Fig. 9 corresponds to Fig. 10(d).

Fig. 11 shows a travelling apparatus as comprising distance sensor 111, yaw rate sensor 112, signal processing unit 113, travel path storage unit 114, map storage medium 115, storage medium reader unit 116, display unit 117, and operating unit 118. A photoelectric distance measuring unit which is capable of generating a pulse signal per unit travelling distance in response to rotation of the tires of a vehicle, an electromagnetic type of distance measuring unit or a mechanical contact type of distance measuring unit may be used as a distance sensor 111. The yaw rate sensor 112 may comprise a gyroscope which is capable of generating a signal representing the angular velocity increment in the yaw direction while the vehicle is running. The signal processing unit 113 (computer-aided control) includes a CPU, ROMs for programming, RAMs for controlling etc. The CPU is capable of counting pulse signals from the distance sensor 111 to determine the travelling distance; determining the change of travelling direction from signals from the yaw rate sensor 112; estimating on the basis of these variables thus determined, the instantaneous position of the vehicle on the X-Y coordinates every time the vehicle has run a unit distance. The travel path storage unit 114 is capable of storing instantaneous car position data from the signal processing unit 113. The map storage medium 115 has digitalized map information stored in the form of files. The storage medium reader unit 116 selectively reads necessary map information from the map storage medium 115. The display unit 117 shows a map thus retrieved from the storage medium, and at the same time, the travel trace of the vehicle, the instantaneous position of the vehicle and the direction in which the vehicle is presumed to travel on the map. The operation unit 118 permits selection of map to be displayed, setting of the start position in the map appearing on the screen of the display unit, and inputting of selected commands from the travelling apparatus for guiding the vehicle along a target course on the map.

As best seen from Fig. 12, a selected map appears on the screen of the display unit 117. In the map a first mark M1 indicates the instantaneous position of the vehicle on the X-Y coordinates (the instantaneous position on the X-Y coordinates being determined from the travelling distance from the start position times the reducing scale factor of the map); a second mark M2 indicates the direction in which the vehicle is going; and a series of third marks M3 indicate the trace of the vehicle.

When the operating unit 118 is operated to input travelling commands ND to the target course setting means 3 to permit the vehicle to follow a target course in the map appearing on the screen of the display unit, points a, b and c can be put in the map to indicate particular crossings or branches, and then commands such as "Turn to the left." or "Turn to the right" can be given when the vehicle is approaching such a point in the map.

The signal processing unit 113 reads each travelling command to issue an appropriate command ND for example, "Take the right way of the Y-branch appearing ahead of the vehicle." at the time when the instantaneous position mark M1 has come to be a given constant distance D apart to the point a.

It is not necessary to equip the travelling apparatus with a distance sensor 111 because the travelling distance can be determined from the speed sensor 5 of the automatic travelling apparatus shown in Fig. 1. Also, it is not necessary to equip the travelling apparatus with a yaw rate sensor 112 because the yaw rate sensor 6 of the automatic travelling apparatus shown in Fig. 1 can be commonly used.

As may be understood from the above, an automatic travelling apparatus according to the present invention is capable of finding out a permissible travelling area from images taken by a video camera to set a target course in the permissible travelling area; determining a steering amount appropriate for the purpose of permitting the vehicle to put itself on the target course, in consideration of the instantaneous travelling condition of the vehicle; and performing the exact steering control in terms of the steering amount. The exact travelling attained by the automatic travelling apparatus is attributable to two-step determination in which first, a target course is set in a permissible area, and a tentative course is set appropriate for the purpose of permitting the vehicle to put itself on the target course.

## Claims

1. Automatic travelling apparatus comprising: an image pick-up device (1; 11, 12) attached to a vehicle (13); means (2) for determining a permissible travelling area on the basis of an image taken by the image pick-up device (1; 11, 12); means (3) for setting a target course (OC) in the permissible travelling area thus determined; means (5, 6, 7) for detecting the instantaneous running condition ($\delta$, v, $\gamma$) of the vehicle (13); means for estimating a steering amount ($\delta$; $\delta'$); said steering amount ($\delta$; $\delta'$) corresponding to a tentative course approaching the target course (OC) ahead of the vehicle if the vehicle (13) is not travelling on the target course (OC); and means (8, 9) for steering the vehicle (13) with reference to the steering amount ($\delta$; $\delta'$), **characterized in** that the instantaneous running condition comprises the running speed (v), the yaw rate ($\gamma$) and the tire steering angle (6), and that the steering amount ($\delta$; $\delta'$) is estimated on basis of the instantaneous running condition ($\delta$, v, $\gamma$) with comparing a presumed course (AC) with the target course (OC) to permit the vehicle (13) to follow the target course (OC) smoothly, said presumed course (AC) is determined by the instantaneous running condition ($\delta$, v, $\gamma$) and corresponding to the course the vehicle would follow, if no steering correction were effected.

2. Automatic travelling apparatus according to claim 1, wherein the target course (OC) is set on basis of the running speed (v) of the vehicle (13), whereby the curvature of the target course (OC) increases as the running speed (v) of the vehicle (13) decreases, and vice versa, when the vehicle (13) is running on a curved road.

3. Automatic travelling apparatus according to one of the preceding claims, wherein a target course (OC) is set close to the left edge of a relatively wide road on which the vehicle (13) is about to run, whereas a target course (OC) is set on the center of a relatively narrow road on which the vehicle (13) is about to run.

## Patentansprüche

1. Automatische Fahrvorrichtung, umfassend:

eine an einem Fahrzeug (13) angebrachte Bildaufnahmevorrichtung (1; 11, 12);
ein Mittel (2) zum Bestimmen eines zulässigen Fahrbereichs auf der Basis eines durch die Bildaufnahmevorrichtung (1; 11, 12) aufgenommenen Bildes;
ein Mittel (3) zum Setzen eines Zielkurses (OC) im somit bestimmten zulässigen Fahrbereich;

ein Mittel (5, 6, 7) zum Erfassen des momentanen Fahrzustands ($\delta$, v, $\gamma$) des Fahrzeugs (13); ein Mittel zum Bestimmen eines Lenkwerts ($\delta$; $\delta'$); wobei der Lenkwert ($\delta$; $\delta'$) einem vorläufigen Kurs entspricht, der sich dem Zielkurs (OC) vor dem Fahrzeug nähert, falls das Fahrzeug (13) nicht auf dem Zielkurs (OC) fährt; und ein Mittel (8, 9) zum Lenken des Fahrzeugs (13) in bezug auf den Lenkwert ($\delta$; $\delta'$),

**dadurch gekennzeichnet,**

daß der momentane Fahrzustand die Fahrgeschwindigkeit (v), die Gierrate ($\gamma$) und den Reifenlenkwinkel ($\delta$) umfaßt, und daß der Lenkwert ($\delta$, $\delta'$) auf der Basis des momentanen Fahrzustands ($\delta$, v, $\gamma$) bestimmt wird mit Vergleich eines angenommenen Kurses (AC) mit dem Zielkurs (OC), um zu ermöglichen, daß das Fahrzeug (13) dem Zielkurs (OC) gleichförmig folgt, wobei der angenommene Kurs (AC) durch den momentanen Fahrzustand ($\delta$, v, $\gamma$) bestimmt ist und dem Kurs entspricht, dem das Fahrzeug folgen würde, falls keine Lenkkorrektur durchgeführt werden würde.

2. Automatische Fahrvorrichtung nach Anspruch 1, bei der der Zielkurs (OC) auf der Basis der Fahrgeschwindigkeit (v) des Fahrzeugs (13) gesetzt wird, wodurch - wenn das Fahrzeugs auf einem kurvigen Weg fährt - die Krümmung des Zielkurses (OC) zunimmt, wenn die Fahrgeschwindigkeit (v) des Fahrzeugs (13) abnimmt, und umgekehrt.

3. Automatische Fahrvorrichtung nach einem der vorangehenden Ansprüche, bei der ein Zielkurs (OC) nahe dem linken Rand eines relativ breiten Weges gesetzt wird, auf dem das Fahrzeug (13) fährt, wohingehen ein Zielkurs (OC) in der Mitte eines relativ schmalen Weges gesetzt wird, auf dem das Fahrzeug (13) fährt.

**Revendications**

1. Appareil de déplacement automatique comprenant : un dispositif (1 ; 11, 12) de saisie d'images, fixé à un véhicule (13) ; des moyens (2) pour déterminer une zone de déplacement autorisée, sur la base d'une image prise par le dispositif (1 ; 11, 12) de saisie d'images ; des moyens (3) pour régler un itinéraire prédéterminé (OC) dans la zone de déplacement autorisée ainsi déterminée ; des moyens (5, 6, 7) pour détecter la condition instantanée de déplacement ($\delta$, v, $\gamma$) du véhicule (13) ; des moyens pour évaluer une grandeur de braquage ($\delta$ ; $\delta'$) ; ladite grandeur de braquage ($\delta$ ; $\delta'$) correspondant à un itinéraire d'essai se rapprochant de l'itinéraire prédéterminé (OC), en avant du véhicule, si le véhicule (13) ne se déplace pas sur l'itinéraire prédéterminé (OC) ; et des moyens (8, 9) pour braquer le véhicule (13) en faisant référence à la grandeur de braquage ($\delta$ ; $\delta'$), caractérisé par le fait que la condition instantanée de déplacement comprend la vitesse de marche (v), la vitesse de lacet ($\gamma$) et l'angle ($\delta$) de braquage des pneumatiques ; et par le fait que la grandeur de braquage ($\delta$ ; $\delta'$) est évaluée sur la base de la condition instantanée de déplacement ($\delta$, v, $\gamma$), avec comparaison d'un itinéraire présumé (AC) avec l'itinéraire prédéterminé (OC) pour permettre au véhicule (13) de suivre en douceur l'itinéraire prédéterminé (OC), ledit itinéraire présumé (AC) étant déterminé par la condition instantanée de déplacement ($\delta$, v, $\gamma$), et correspondant à l'itinéraire que le véhicule suivrait si aucune correction de braquage n'était effectuée.

2. Appareil de déplacement automatique selon la revendication 1, dans lequel l'itinéraire prédéterminé (OC) est réglé sur la base de la vitesse de marche (v) du véhicule (13), de sorte que la courbure de l'itinéraire prédéterminé (OC) augmente au fur et à mesure que la vitesse de marche (v) du véhicule (13) diminue, et inversement, lorsque le véhicule (13) se déplace sur une route en courbe.

3. Appareil de déplacement automatique selon l'une des revendications précédentes, dans lequel un itinéraire prédéterminé (OC) est réglé à proximité du bord gauche d'une route relativement large, sur laquelle le véhicule (13) est sur le point de se déplacer, tandis qu'un itinéraire prédéterminé (OC) est réglé sur le centre d'une route relativement étroite sur laquelle le véhicule (13) est sur le point de se déplacer.

# FIG. 1

EP 0 354 561 B1

# FIG. 2

# FIG. 3

# FIG. 4

EP 0 354 561 B1

# FIG. 5

# FIG. 6(a)   FIG. 6(b)

# FIG. 7

# FIG. 8

# FIG. 9

# FIG.10(a)　FIG.10(b)　FIG.10(c)　FIG.10(d)

EP 0 354 561 B1

# FIG. 11

# FIG. 12

# FIG. 13

# FIG. 14

# FIG. 15